# EUROPEAN PATENT APPLICATION

(11) **EP 4 852 147 A1**
(43) Date of publication of application: **09.12.2026**
(21) Application number: 25873716.2
(22) Date of filing: 04.09.2025
(51) Int. Cl.: H01M 10/63, H01M 10/613, H01M 10/6552, H01M 10/6556, H01M 10/625

(54) **BATTERY COOLING CONTROL APPARATUS AND COOLING CONTROL METHOD**

(30) Priority: 24.09.2024 KR 20240128994; 28.02.2025 KR 20250026854; 07.08.2025 KR 20250109036
(71) Applicant: LG Energy Solution, Ltd., Seoul 07335 (KR)
(72) Inventor: LEE, Bum-Hee, Daejeon 34122 (KR)
(74) Representative: Plasseraud IP
(86) International application number: PCT/KR2025/013656
(87) International publication number: WO 2026/071543

(57) **Abstract**

A battery cooling control apparatus and a battery cooling control method are provided. The battery cooling control apparatus according to the present disclosure includes a cooling network including a first cooling medium channel and a second cooling medium channel for a battery pack, a cooling medium circulation unit configured to individually induce or block cooling medium circulation in the first cooling medium channel and cooling medium circulation in the second cooling medium channel, and a control unit configured to set a target control mode for the cooling medium circulation unit based on a fire risk index of the battery pack. The control unit is configured to control the cooling medium circulation unit according to the target control mode.

## Description

### TECHNICAL FIELD

The present disclosure relates to battery cooling control for thermal propagation risk prevention and rapid fire suppression in a battery pack.

This application is based on and claims priority from Korean Patent Application No. 10-2024-0128994 filed on September 24, 2024, Korean Patent Application No. 10-2025-0026854 filed on February 28, 2025 and Korean Patent Application No. 10-2025-0109036 filed on August 7, 2025, the disclosures of which are incorporated herein in its entirety by reference.

### BACKGROUND ART

Recently, there has been a rapid increase in the demand for portable electronic products such as laptop computers, video cameras and mobile phones, and with the extensive development of electric vehicles, accumulators for energy storage, robots and satellites, many studies are being made on high performance batteries that can be repeatedly charged and discharged.

Batteries on the market now include nickel-cadmium batteries, nickel-hydrogen batteries, nickel-zinc batteries, lithium batteries and the like, and among them, lithium batteries have little or no memory effect, and thus they are gaining more attention than nickel-based batteries for their advantages including that recharging can be done whenever it is convenient, the self-discharge rate is very low and energy density is high.

A battery pack for a battery system (for example, an electric vehicle or an energy storage system) requiring large capacity and high voltage may include a few to a few hundred battery cells connected either in series or in parallel, or both.

The close-packed structure of the battery cells within the limited space of the battery pack is beneficial for high energy density, but abnormal conditions of some battery cells easily have negative impacts on the remaining battery cells. Typically, when thermal runaway occurs in a certain battery cell due to overheating, an internal circuit short or the like, so-called 'thermal propagation', in which the thermal runaway sequentially occurs in other battery cells adjacent thereto, may occur.

### DISCLOSURE

### Technical Problem

The present disclosure is designed to address the above-described problems, and therefore the present disclosure is directed to providing an apparatus and method that monitors the fire risk of a battery pack, and individually controls dual cooling medium channels provided to the battery pack.

These and other objectives and advantages of the present disclosure may be understood from the following description and will become apparent from the embodiments of the present disclosure. Also, it will be easily understood that the objectives and advantages of the present disclosure may be realized by the means set forth in the appended claims and a combination thereof.

### Technical Solution

A battery cooling control apparatus according to an aspect of the present disclosure includes a cooling network including a first cooling medium channel and a second cooling medium channel for a battery pack, a cooling medium circulation unit configured to individually induce or block cooling medium circulation in the first cooling medium channel and cooling medium circulation in the second cooling medium channel, and a control unit configured to set a target control mode for the cooling medium circulation unit based on a fire risk index of the battery pack. The control unit is configured to control the cooling medium circulation unit according to the target control mode.

In response to the fire risk index of the battery pack being less than a first set value, the control unit may be configured to set, as the target control mode, a control mode that induces the cooling medium circulation in any one of the first cooling medium channel and the second cooling medium channel and blocks the cooling medium circulation in the other one of the first cooling medium channel and the second cooling medium channel.

In response to the fire risk index of the battery pack being less than a first set value, the control unit may be configured to set, as the target control mode, a control mode that induces the cooling medium circulation in the first cooling medium channel and the cooling medium circulation in the second cooling medium channel in an alternating manner.

In response to the fire risk index of the battery pack being equal to or more than a first set value, the control unit may be configured to set, as the target control mode, a control mode that induces both of the cooling medium circulation in the first cooling medium channel and the cooling medium circulation in the second cooling medium channel.

In response to the fire risk index of the battery pack being equal to or more than a second set value that is larger than the first set value, the control unit may be configured to set, as the target control mode, a control mode that induces the cooling medium circulation in any one of the first cooling medium channel and the second cooling medium channel and blocks the cooling medium circulation in the other one of the first cooling medium channel and the second cooling medium channel.

In response to the fire risk index of the battery pack being equal to or more than a second set value that is larger than the first set value, the control unit may be configured to set, as the target control mode, a control mode that increases an internal pressure of any one of the first cooling medium channel and the second cooling medium channel and reduces an internal pressure of the other one of the first cooling medium channel and the second cooling medium channel.

The control unit may be configured to control the cooling medium circulation unit to increase a cooling medium circulation speed in the any one cooling medium channel and reduce a cooling medium circulation speed in the other cooling medium channel according to the target control mode.

The control unit may be configured to control the cooling medium circulation unit to perform cooling medium supply to the any one cooling medium channel through both of an inlet and an outlet of the any one cooling medium channel according to the target control mode.

The control unit may be configured to control the cooling medium circulation unit to perform cooling medium supply to the any one cooling medium channel through an inlet of the any one cooling medium channel and cooling medium supply to the any one cooling medium channel through an outlet of the any one cooling medium channel in an alternating manner according to the target control mode.

The first cooling medium channel and the second cooling medium channel may be positioned to face each other, on two sides of the battery pack.

A battery pack according to another aspect of the present disclosure includes the battery cooling control apparatus.

An electric vehicle according to still another aspect of the present disclosure includes the battery pack.

A battery cooling control method according to yet another aspect of the present disclosure includes setting, based on a fire risk index of a battery pack, a target control mode for a cooling medium circulation unit that individually induces or blocks cooling medium circulation in a first cooling medium channel included in a cooling network and cooling medium circulation in a second cooling medium channel included in a cooling network; and controlling the cooling medium circulation unit according to the target control mode.

Setting the target control mode may include, in response to the fire risk index of the battery pack being less than a first set value, setting, as the target control mode, a control mode that induces the cooling medium circulation in any one of the first cooling medium channel and the second cooling medium channel and blocks the cooling medium circulation in the other one.

Setting the target control mode may include, in response to the fire risk index of the battery pack being equal to or more than a first set value, setting, as the target control mode, a control mode that induces both of the cooling medium circulation in the first cooling medium channel and the cooling medium circulation in the second cooling medium channel.

Setting the target control mode may include, in response to the fire risk index of the battery pack being equal to or more than a second set value that is larger than the first set value, setting, as the target control mode, a control mode that increases an internal pressure of any one of the first cooling medium channel and the second cooling medium channel and reduces an internal pressure of the other one of the first cooling medium channel and the second cooling medium channel.

A computer-readable medium according to further another aspect of the present has recorded thereon a program for causing a computer to perform the battery cooling control method.

### Advantageous Effects

According to at least one of the embodiments of the present disclosure, the fire risk of the battery pack may be monitored and used to individually control the dual cooling medium channels provided for heat exchange with the battery pack.

According to at least one of the embodiments of the present disclosure, when the fire risk of the battery pack is low, the dual cooling medium channels may be prohibited from simultaneously operating to avoid over-cooling and prevent unnecessary power consumption of the battery pack.

According to at least one of the embodiments of the present disclosure, when the fire risk of the battery pack is high, the dual cooling medium channels may be allowed to simultaneously operate to reduce the likelihood that overheating of the battery pack leads to fires.

According to at least one of the embodiments of the present disclosure, when the fire risk of the battery pack is extremely severe or fire has already occurred in the battery pack, an intentional damage site may be formed by intensive cooling medium circulation through a specific cooling medium channel to allow the cooling medium to directly act on the battery pack as a fire extinguishing material.

The effects of the present disclosure are not limited to the above-mentioned effects, and these and other effects will be clearly understood by those skilled in the art from the appended claims.

### BRIEF DESCRIPTION OF THE DRAWINGS

The accompanying drawings illustrate the exemplary embodiments of the present disclosure and together with the following detailed description, serve to provide a better understanding of the technical aspects of the present disclosure, and thus the present disclosure should not be constructed as being limited to any of the drawings.
FIG. 1 is a diagram schematically showing a configuration of an electric vehicle including a battery cooling control apparatus according to an embodiment of the present disclosure.
FIG. 2 is a diagram referenced in describing an example of a connection relationship between a battery block and a sensing unit shown in FIG. 1.
FIG. 3 is a diagram referenced in briefly describing an example of a connection relationship between a battery pack and a cooling network.
FIGS. 4 and 5 are diagrams referenced in briefly describing an example of a connection relationship between a cooling network and a cooling medium circulation unit.
FIG. 6 is a flowchart referenced in briefly describing a cooling control method according to another embodiment of the present disclosure.
FIG. 7 is a diagram referenced in describing a first control mode.
FIG. 8 is a diagram referenced in describing a second control mode.
FIG. 9 is a diagram referenced in describing a third control mode.
FIG. 10 is a diagram referenced in describing a fourth control mode.
FIG. 11 is a diagram referenced in describing a fifth control mode.
FIG. 12 is a diagram referenced in describing a sixth control mode.
FIG. 13 is a diagram referenced in describing a seventh control mode.
FIG. 14 is a diagram referenced in describing an exemplary situation of cooling medium leakage from a cooling network to a battery pack.
FIG. 15 is a flowchart referenced in briefly describing a cooling control method according to still another embodiment of the present disclosure.

### BEST MODE

Hereafter, the exemplary embodiments of the present disclosure will be described in detail with reference to the accompanying drawings. Prior to the description, it should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are embodiments of the present disclosure to describe the technical aspects of the present disclosure but not intended to be limiting, so it should be understood that a variety of other equivalents and modifications could be made thereto at the time the application was filed.

The terms including the ordinal numbers such as "first", "second" and the like, are used to distinguish one element from another among various elements, but not intended to limit the elements by the terms.

Unless the context clearly indicates otherwise, the terms "comprise" and "include" when used in this specification, specify the presence of the stated elements, but do not preclude the presence or addition of one or more other elements. Additionally, the term "unit" as used herein refers to a processing unit of at least one function or operation, and may be implemented by hardware and software either alone or in combination.

In addition, throughout this specification, it will be further understood that when an element is referred to as being "connected to" another element, it can be directly connected to the other element or intervening elements may be present.

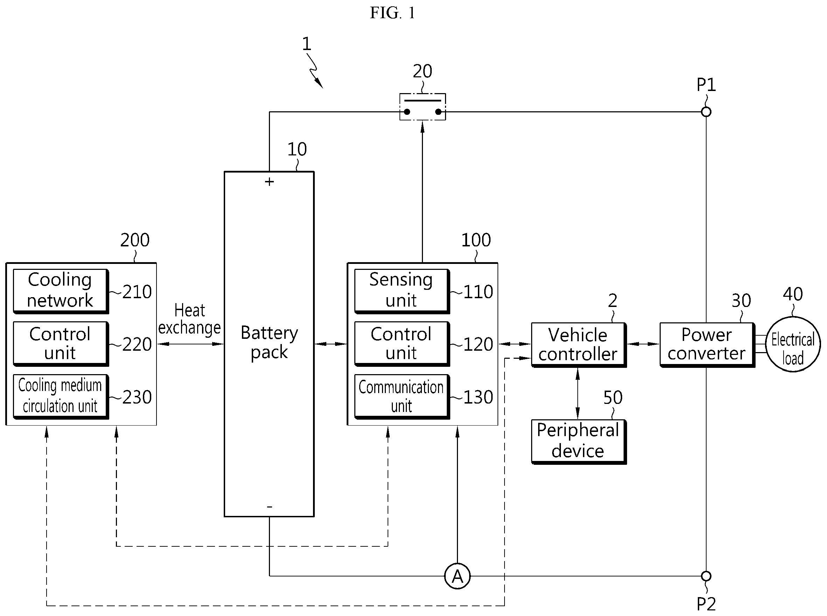

FIG. 1 is a diagram schematically showing a configuration of an electric vehicle including a battery cooling control apparatus according to an embodiment of the present disclosure.

Referring to FIG. 1, the electric vehicle 1 may include a battery pack 10, a relay 20, a vehicle controller 2, a power converter 30, an electrical load 40, a battery management system 100 and the battery cooling control apparatus 200. The electric vehicle 1 may further include a peripheral device 50.

The battery pack 10 includes a plurality of battery blocks BB₁~BB_{N} (N is a natural number of 2 or greater), a first charging/discharging terminal P1 and a second charging/discharging terminal P2.

In this specification, in the description that is shared between the plurality of battery blocks BB₁~BB_{N,} the symbol 'BB' or 'BBₖ' is affixed to the battery block. k is a natural number that is equal to or smaller than N.

The plurality of battery blocks BB₁~BB_{N} may be connected to each other between the first charging/discharging terminal P₁ and the second charging/discharging terminal P2 either in series or in parallel, or both.

The battery block BB may include one battery module, or two or more battery modules. When the battery block BB includes a plurality of battery modules, the plurality of battery modules may be connected either in series or in parallel, or both.

Each battery module may include an assembly of two or more battery cells. When the battery module includes a plurality of battery cells, the plurality of battery cells may be connected either in series or in parallel, or both. In this specification, the battery cell refers to a basic unit of an electricity storage device capable of charging and discharging on its own, and is not limited to a particular one and may include, for example, any rechargeable battery cell such as a lithium-ion cell.

The relay 20 is installed on a power line connecting the battery pack 10 to the charging/discharging terminals P1, P2. FIG. 1 shows that the relay 20 is connected between a positive terminal of the battery pack 10 and the charging/discharging terminal P1, but the electric vehicle 1 may further include an additional relay 20 connected between a negative terminal of the battery pack 10 and the charging/discharging terminal P2. The relay 20 is controlled to be turned on/off in response to a switching signal from the battery management system 100 or the vehicle controller. According to an embodiment of the present disclosure, the relay 20 may include a mechanical contactor that is turned on/off by the magnetic force of a coil, or a semiconductor switch such as a Metal Oxide Semiconductor Field Effect transistor (MOSFET).

The battery management system 100 includes a sensing unit 110 and a control unit 120. The battery management system 100 may further include a communication unit 130.

The sensing unit 110 generates battery monitoring information indicating the state of each of the plurality of battery blocks BB₁~BB_{N} of the battery pack 10.

The sensing unit 110 may periodically or aperiodically measure at least one state parameter of each of the plurality of battery blocks BB₁~BB_{N,} and provide the battery monitoring information indicating each of the measured state parameters to the control unit 120.

The state parameter of the battery block BBₖ may indicate a temperature of the battery block BBₖ (referred to as 'block temperature'), a cell voltage of each battery cell BC included in the battery block BB, or a secondary parameter (for example, an amount of change, a change ratio) that may be derived by applying a mathematical function. Besides, the state parameter is not limited to a particular type and may include any type of state parameter indicating the degree of thermal anomaly of the battery block BBₖ directly or indirectly.

A current sensor A is installed on the power line connecting the battery pack 10 to the charging/discharging terminals P1, P2 to measure the current flowing through the battery pack 10. The current sensor A may be included in the sensing unit 110.

The control unit 120 may be implemented in hardware using at least one of application specific integrated circuits (ASICs), digital signal processors (DSPs), digital signal processing devices (DSPDs), programmable logic devices (PLDs), field programmable gate arrays (FPGAs), microprocessors, or electrical units for performing other functions.

The control unit 120 is operably coupled to at least one of the sensing unit 110 or the communication unit 130. In this instance, operably coupled refers to connection to enable signal transmission and reception in one or two directions.

The control unit 120 may have a memory device. The memory device may include at least one type of storage medium of flash memory type, hard disk type, Solid State Disk (SSD) type, Silicon Disk Drive (SDD) type, multimedia card micro type, random access memory (RAM), static random access memory (SRAM), read-only memory (ROM), electrically erasable programmable read-only memory (EEPROM) or programmable read-only memory (PROM). The memory device may store data and programs required for the operations by the control unit 120. The memory device may store data indicating the results of the operations by the control unit 120.

The control unit 120 may determine whether each of the plurality of battery blocks BB₁~BB_{N} is abnormal based on the state data received from the sensing unit 110. When at least one of the plurality of battery blocks BB₁~BB_{N} is diagnosed as abnormal, the control unit 120 is configured to perform at least one safety operation for the battery pack 10.

The safety operation may include the turn-off control of the relay 20. The safety operation may include battery cooling control as described below.

The power converter 30 may include at least one of a direct current (DC)-alternating current (AC) inverter or a DC-DC converter. The power converter 30 may convert DC power (discharge power) from the battery pack 10 into AC power and supply it to the electrical load 40 during discharging of the battery pack 10. The electrical load 40 may include, for example, a three-phase AC motor that generates kinetic energy for the driving of the electric vehicle 1.

The control unit 120 may determine a state of charge (SOC) of each of the plurality of battery blocks BB₁~BB_{N} based on the battery monitoring information, and further determine a state of health (SOH).

The SOC of the battery block BB is the ratio of the remaining capacity of the battery block to its maximum capacity (Full Charge Capacity (FCC)), and is usually represented in a range of 0 to 100% or 0 to 1. The remaining capacity indicates the amount of charge currently stored in the battery block BB.

The SOH of the battery block BB is the ratio of the maximum capacity of the battery block BB to its design capacity, and is usually represented in a range of 0 to 100% or 0 to 1. The design capacity indicates the maximum amount of charge the battery block BB can store when it was new. As the battery block BB degrades, the maximum capacity gradually decreases from the design capacity. Each of the SOC and SOH may be estimated from one of known techniques or a combination of two or more thereof, and its detailed description is omitted.

The communication unit 130 includes at least one communication circuit to support wired or wireless communication between the control unit 120 and the vehicle controller 2, the peripheral device 50 and/or the battery cooling control apparatus 200. The wired communication may include, for example, controller area network (CAN) communication, and the wireless communication may include, for example, Zigbee or Bluetooth communication. The communication protocol is not limited to the above listed examples and may include any type of communication protocol that supports wired or wireless communication.

The peripheral device 50 may include vehicle sensor(s) to measure at least one parameter (for example, vehicle speed) related to the state of the electric vehicle 1. The peripheral device 50 may include an output device (for example, a display, a speaker) to provide the information received from the control unit 120 and/or the vehicle controller 2 in a recognizable format. The peripheral device 50 may operate using the DC or AC power supplied from the power converter 30.

Although FIG. 1 shows that the battery pack 10 and the battery management system 100 are physically independent of each other, the battery management system 100 may be included as the component of the battery pack 10.

The battery cooling control apparatus 200 may include a control unit 220, and further include at least one of a cooling network 210 or a cooling medium circulation unit 230. The at least one of the cooling network 210 or the cooling medium circulation unit 230 may be provided as the component of the battery pack 10, rather than the component of the battery cooling control apparatus 200.

The cooling medium may include any one of known materials that facilitate cooling, for example, water, carbon dioxide, ammonia or a nonconductive liquid, or a combination of two or more thereof. Preferably, in addition to the cooling effect, the cooling medium may include any one of known materials that have a noncombustible and/or noninflammable property, or a combination of two or more thereof.

The cooling network 210 is provided for heat exchange with each of the plurality of battery blocks BB₁~BB_{N} during the flow of the cooling medium through cooling medium paths inside.

The control unit 220 controls the cooling network 210 according to the battery monitoring information provided from the battery management system 100. The control unit 220 may be implemented in hardware using at least one of application specific integrated circuits (ASICs), digital signal processors (DSPs), digital signal processing devices (DSPDs), programmable logic devices (PLDs), field programmable gate arrays (FPGAs), microprocessors, or electrical units for performing other functions.

The control unit 220 may have a memory device. The memory device may include at least one type of storage medium of flash memory type, hard disk type, Solid State Disk (SSD) type, Silicon Disk Drive (SDD) type, multimedia card micro type, random access memory (RAM), static random access memory (SRAM), read-only memory (ROM), electrically erasable programmable read-only memory (EEPROM) or programmable read-only memory (PROM). The memory device may store data and programs required for the operations by the control unit 220. The memory device may store data indicating the results of the operations by the control unit 220. The control unit 220 may include at least one memory device and at least one processor, and may be referred to as 'battery controller'. The control unit 220 may be made, used and/or sold as a stand-alone device.

The control unit 220 of the battery cooling control apparatus 200 may be replaced with the control unit 120 of the battery management system 100, and in this case, the control unit 220 may be removed from the battery cooling control apparatus 200.

The electrical energy needed to operate the battery cooling control apparatus 200 may be supplied from the battery pack. As an example, a voltage regulator (not shown) coupled to the battery pack may generate a power source voltage using the electrical energy of the battery pack 10 and supply it to the battery cooling control apparatus 200, and each component of the battery cooling control apparatus 200 may be activated by the power source voltage.

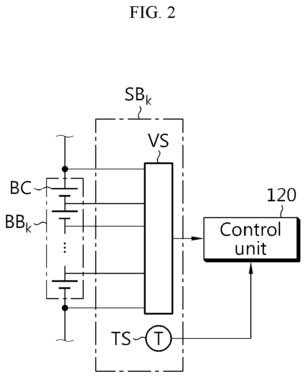

FIG. 2 is a diagram referenced in describing an example of a connection relationship between the battery block and the sensing unit shown in FIG. 1. For convenience of description, FIG. 2 shows only the battery block BBₖ of the plurality of battery blocks BB₁~BB_{N} included in the battery pack 10.

Referring to FIG. 2, the sensing unit 110 includes a sensing circuit SBₖ provided to the battery block BBₖ. Accordingly, those skilled in the art will readily understand that the sensing unit 110 may include a plurality of sensing circuits SB₁~SB_{N}.

The sensing circuit SBₖ may include a temperature sensor TS and further include a voltage detection circuit VS.

The temperature sensor TS may be attached to the outer surface of the battery block BBₖ or installed at a predetermined location away from the battery block BBₖ to measure the temperature (i.e., the block temperature) of the battery block BBₖ. The temperature sensor TS may generate a temperature signal indicating the temperature of the battery block BBₖ, and the control unit 120 may collect the temperature signal of the temperature sensor TS.

The voltage detection circuit VS may include at least one voltage sensor. The voltage detection circuit VS may measure a module voltage of the battery block BBₖ. The module voltage is a voltage across the battery block BBₖ. The voltage detection circuit VS may further measure a cell voltage of each battery cell BC included in the battery block BBₖ. The cell voltage is a voltage across the battery cell BC. The voltage detection circuit VS may generate a voltage signal indicating the module voltage of the battery block BBₖ and the cell voltage of each battery cell BC, and the control unit 120 may collect the voltage signal of the voltage detection circuit VS.

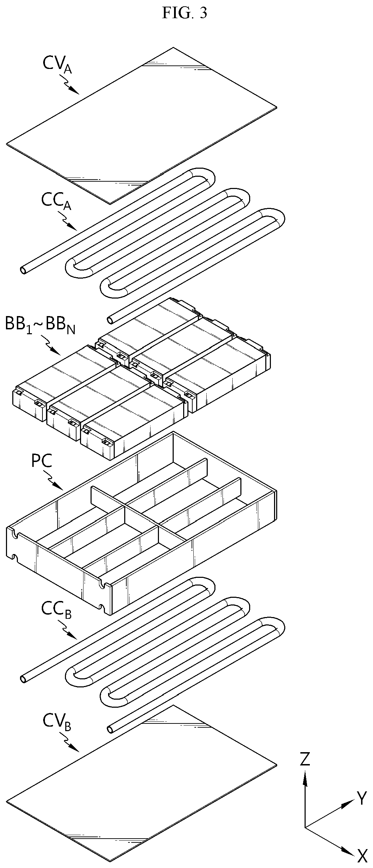

FIG. 3 is a diagram referenced in briefly describing an example of a connection relationship between the battery pack and the cooling network.

Referring to FIG. 3, the battery pack 10 includes the plurality of battery blocks BB₁~BB_{N} and may further include a pack case PC.

As shown in FIG. 3, the pack case PC provides an internal space in which the plurality of battery blocks BB₁~BB_{N} may be housed.

The pack case PC may include a bottom frame and a side frame, and further include a compartment frame. The side frame and the compartment frame may be positioned perpendicularly to the bottom frame along the Y axis. The side frame may form a wall along the outer periphery the bottom frame. A space defined by the bottom frame and the side frame may be divided into a plurality of sub-spaces by at least one compartment frame. The plurality of battery blocks BB₁~BB_{N} may be individually positioned in the plurality of sub-spaces.

The cooling network 210 includes a first cooling medium channel CC_{A} and a second cooling medium channel CC_{B}.

The first cooling medium channel CC_{A} and the second cooling medium channel CC_{B} may be positioned, facing each other, at least in part, on two sides of the battery pack 10. For example, as shown in FIG. 3, the battery pack 10 may be positioned between the first cooling medium channel CC_{A} and the second cooling medium channel CC_{B} on the basis of the Z axis. That is, the first cooling medium channel CC_{A} may be physically coupled to or contact the pack case PC and/or the battery blocks at the top of the pack case PC, and the second cooling medium channel CC_{B} may be physically coupled to or contact the pack case PC and/or the battery blocks at the bottom of the pack case PC.

The first cooling medium channel CC_{A} and the second cooling medium channel CC_{B} may be channels through which the cooling medium flows between inlets IL_{A}, IL_{B} and outlets OL_{A,} OL_{B}, respectively.

The first cooling medium channel CC_{A} may have a predetermined pattern that runs above the plurality of subdivisions formed within the pack case PC. The second cooling medium channel CC_{B} may have a predetermined pattern that runs below the plurality of subdivisions formed within the pack case PC. FIG. 3 shows that each of the first cooling medium channel CC_{A} and the second cooling medium channel CC_{B} has a zigzag or meandering shape.

The pack case PC may further include at least one of a first cover CV_{A} or a second cover CV_{B}. The first cover CV_{A} may be disposed on the first cooling medium channel CC_{A}, and the second cover CV_{B} may be disposed under the second cooling medium channel CC_{B}. In addition, an edge portion of the first cover CV_{A} may be physically coupled to an upper edge of the side frame, and an edge portion of the second cover CV_{B} may be physically coupled to a lower edge of the side frame. That is, the first cooling medium channel CC_{A} and the second cooling medium channel CC_{B} may be housed in the pack case PC together with the battery blocks to form a dual cooling structure.

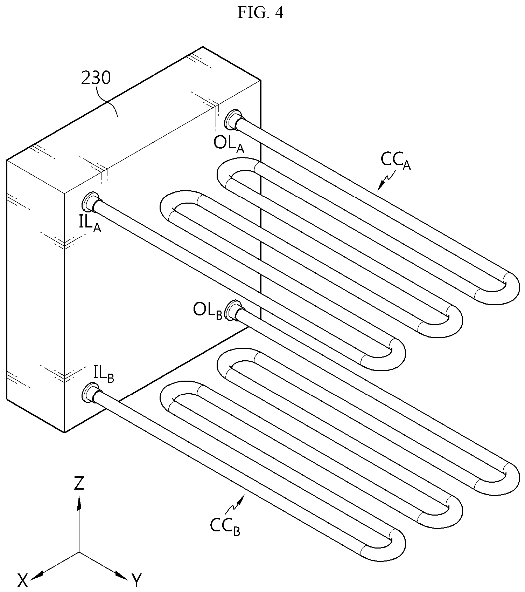

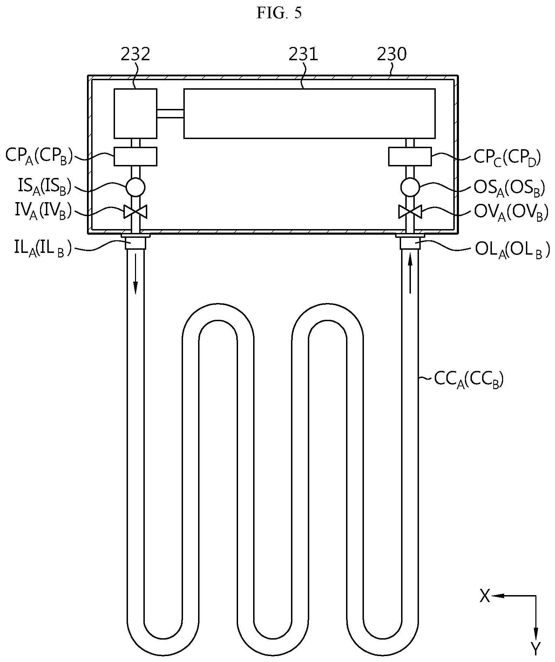

FIGS. 4 and 5 are diagrams referenced in briefly describing an example of a connection relationship between the cooling network and the cooling medium circulation unit.

Referring to FIGS. 4 and 5, the cooling medium circulation unit 230 is provided to individually induce or block the cooling medium circulation in the first cooling medium channel CC_{A} and the cooling medium circulation in the second cooling medium channel CC_{B}.

The cooling medium circulation unit 230 may feed the cooling medium through the inlet IL_{A} of the first cooling medium channel CC_{A} and hold the cooling medium leaving the outlet OL_{A} of the first cooling medium channel CC_{A}. The same is the case with the second cooling medium channel CC_{B}.

As shown in FIG. 4, the first cooling medium channel CC_{A} and the second cooling medium channel CC_{B} may be horizontally spaced apart from each other along the Z axis with respect to the X-Y plane. The pack case PC and the plurality of battery blocks BB₁~BB_{N} mounted on the pack case PC may be positioned in a space along the Z-axis direction between the first cooling medium channel CC_{A} and the second cooling medium channel CC_{B}.

The cooling medium circulation unit 230 may include a cooling medium tank 231 and a chiller 232. The cooling medium circulation unit 230 may further include at least one of first to fourth pumps CP_{A,} CP_{B,} CP_{C,} CP_{D}.

The cooling medium circulation unit 230 may further include at least one of a first inlet valve IV_{A}, a second inlet valve IV_{B}, a first outlet valve OV_{A} or a second outlet valve OV_{B}.

The cooling medium circulation unit 230 may further include at least one of a first inlet sensor IS_{A}, a second inlet sensor IS_{B}, a first outlet sensor OS_{A} or a second outlet sensor OS_{B}.

The cooling medium tank 231 may store the cooling medium leaving each of the outlet OL_{A} of the first cooling medium channel CC_{A} and the outlet OL_{B} of the second cooling medium channel CC_{B}, and supply the stored cooling medium to the chiller 232. That is, the cooling medium that absorbs heat of at least one battery block BB while flowing through each of the first cooling medium channel CC_{A} and the second cooling medium channel CC_{B} is fed into the chiller 232 through the cooling medium tank 231.

The chiller 232 may reduce the temperature of the fed cooling medium and supply it to the pump (for example, CP_{A} and/or CP_{B}).

The control unit 220 may control the flow direction of the cooling medium by each of the first to fourth pumps CP_{A,} CP_{B,} CP_{C,} CP_{D}.

The first pump CP_{A} may be installed at the inlet IL_{A} side of the first cooling medium channel CC_{A}. The first pump CP_{A} may change the flow direction of the cooling medium through the inlet IL_{A}. During the operation of the first pump CP_{A}, the cooling medium may be supplied from the cooling medium circulation unit 230 to the inlet IL_{A} of the first cooling medium channel CC_{A}, or on the contrary, the cooling medium may flow from the inlet IL_{A} to the cooling medium circulation unit 230. In this case, during the operation of the first pump CP_{A}, the cooling medium may flow from the outlet OL_{A} of the first cooling medium channel CC_{A} to the cooling medium tank 231.

The second pump CP_{B} may be installed at the inlet IL_{B} side of the second cooling medium channel CC_{B}. During the operation of the second pump CP_{B}, the cooling medium may be supplied from the cooling medium circulation unit 230 to the inlet IL_{B} of the second cooling medium channel CC_{B}, or on the contrary, the cooling medium may flow from the inlet IL_{B} to the cooling medium circulation unit 230. In this case, during the operation of the second pump CP_{B}, the cooling medium may flow from the outlet OL_{B} of the second cooling medium channel CC_{B} to the cooling medium tank 231.

The third pump CP_{C} may be installed at the outlet OL_{A} side of the first cooling medium channel CC_{A}. During the operation of the third pump CP_{C}, the cooling medium may be supplied to the outlet OL_{A} of the first cooling medium channel CC_{A}. In this case, during the operation of the third pump CP_{C}, the cooling medium may flow to the cooling medium circulation unit 230 through the outlet OL_{A} of the first cooling medium channel CC_{A}, or on the contrary, the cooling medium may be supplied to the outlet OL_{B} from the cooling medium circulation unit 230.

The fourth pump CP_{D} may be installed at the outlet OL_{B} side of the second cooling medium channel CC_{B}. During the operation of the fourth pump CP_{D}, the cooling medium may flow to the cooling medium circulation unit 230 through the outlet OL_{B} of the second cooling medium channel CC_{B}, or on the contrary, the cooling medium may be supplied from the cooling medium circulation unit 230 to the outlet OL_{B}. In this case, during the operation of the fourth pump CP_{D}, the cooling medium may flow from the outlet OL_{B} of the second cooling medium channel CC_{B} to the cooling medium tank 231.

The first inlet valve IV_{A} may be installed at the inlet IL_{A} side of the first cooling medium channel CC_{A} and may open and close the inlet IL_{A} of the first cooling medium channel CC_{A} in response to a command from the control unit 220. During the operation of the first pump CP_{A}, the inlet IL_{A} may be opened by the first inlet valve IV_{A}.

The first outlet valve OV_{A} may be installed at the outlet OL_{A} side of the first cooling medium channel CC_{A} and may open and close the outlet OL_{A} of the first cooling medium channel in response to the command from the control unit 220. During the operation of the third pump CP_{C}, the outlet OL_{A} may be opened by the first outlet valve OV_{A}.

The second inlet valve IV_{B} may be installed at the inlet IL_{B} side of the second cooling medium channel CC_{B} and may open and close the inlet IL_{B} of the second cooling medium channel CC_{B} in response to the command from the control unit 220. During the operation of the second pump CP_{B}, the inlet IL_{B} may be opened by the second inlet valve IV_{B}.

The second outlet valve OV_{B} may be installed at the outlet OL_{B} side of the second cooling medium channel CC_{B} and may open and close the outlet OL_{B} of the second cooling medium channel CC_{B} in response to the command from the control unit 220. During the operation of the fourth pump CP_{D}, the outlet OL_{B} may be opened by the second outlet valve OV_{B}.

By interactions between at least two of the cooling medium tank 231, the chiller 232, the first pump CP_{A}, the first inlet valve IV_{A} or the first outlet valve OV_{A}, the cooling medium circulation in the first cooling medium channel CC_{A} may be induced or blocked. Likewise, by interactions between at least two of the cooling medium tank 231, the chiller 232, the second pump CP_{B}, the second inlet valve IV_{B} or the second outlet valve OV_{B}, the cooling medium circulation in the second cooling medium channel CC_{B} may be facilitated or hindered.

The first inlet sensor IS_{A} may measure the flow rate, flow velocity, pressure and/or temperature of the cooling medium supplied from the cooling medium circulation unit 230 to the inlet IL_{A} of the first cooling medium channel CC_{A}, and notify the control unit 220 of each of the measured cooling medium parameters.

The first outlet sensor OS_{A} may measure the flow rate, flow velocity, pressure and/or temperature of the cooling medium flowing from the outlet OL_{A} of the first cooling medium channel CC_{A} to the cooling medium circulation unit 230, and notify the control unit 220 of each of the measured cooling medium parameters.

The second inlet sensor IS_{B} may measure the flow rate, flow velocity, pressure and/or temperature of the cooling medium supplied from the cooling medium circulation unit 230 to the inlet IL_{B} of the second cooling medium channel CC_{B}, and notify the control unit 220 of the measured cooling medium information.

The second outlet sensor OS_{B} may measure the flow rate, flow velocity, pressure and/or temperature of the cooling medium flowing from the outlet OL_{B} of the second cooling medium channel CC_{B} to the cooling medium circulation unit 230, and notify the control unit 220 of each of the measured cooling medium parameters.

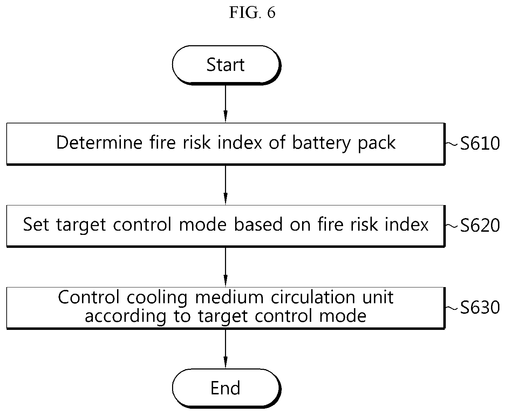

FIG. 6 is a flowchart referenced in briefly describing a cooling control method according to another embodiment of the present disclosure. The method according to FIG. 6 may be performed periodically or aperiodically in a repeated manner.

Referring to FIG. 6, in step S610, the control unit 220 determines a fire risk index of the battery pack 10.

The control unit 220 may determine the fire risk index of the battery pack 10 based on the measurements of at least one state parameter of at least one of the plurality of battery blocks BB₁~BB_{N}.

As an example, the highest block temperature of the plurality of battery blocks BB₁~BB_{N} may be determined as the fire risk index. As another example, the average block temperature of two or more battery blocks of the plurality of battery blocks BB₁~BB_{N} may be determined as the fire risk index. As still another example, the highest rate of block temperature increase of the plurality of battery blocks BB₁~BB_{N} may be determined as the fire risk index. As yet another example, the average rate of block temperature increase of two or more battery blocks of the plurality of battery blocks BB₁~BB_{N} may be determined as the fire risk index. In addition to the temperature or the rate of temperature increase, a value of a parameter indicating the fire risk of the battery pack 10 directly or indirectly may be determined as the fire risk index.

In step S620, the control unit 220 sets a target control mode for the cooling medium circulation unit 230 based on the fire risk index of the battery pack 10 determined in the step S610. The memory device of the control unit 220 may store a set of instructions respectively related to a plurality of preset control modes, and the target control mode may be any one selected from the plurality of control modes.

In step S630, the control unit 220 controls the cooling medium circulation unit 230 according to the target control mode set in the step S620. To control the cooling medium circulation unit 230, the set of instructions related to the control mode selected in the step S620 may be used.

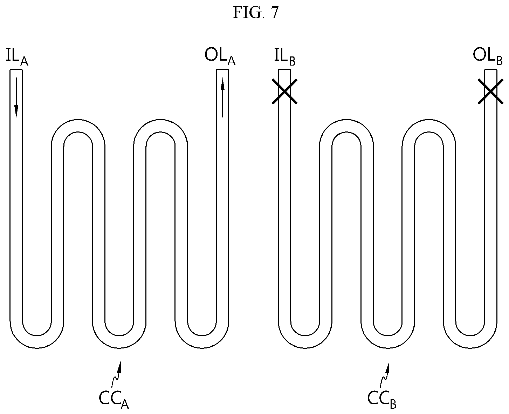

In FIGS. 7 to 11 as described below, to help understanding, unlike FIG. 4, the first cooling medium channel CC_{A} and the second cooling medium channel CC_{B} are depicted side by side on the left and right.

FIG. 7 is a diagram referenced in describing a first control mode.

Referring to FIG. 7, the control unit 220 may set the first control mode as the target control mode in response to the fire risk index being less than a first set value or equal to or more than a second set value.

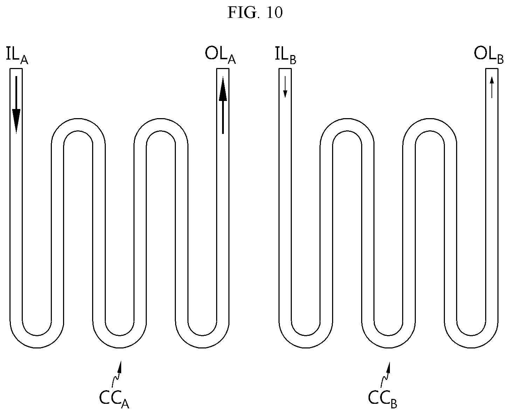

The first set value may be preset as a criterion for determination of overheating of the battery pack 10. Accordingly, the fire risk index less than the first set value may indicate that temperature state of the battery pack 10 is normal. The second set value will be described with reference to FIG. 10 below.

The first control mode may be a control mode that induces the cooling medium circulation in any one of the first cooling medium channel CC_{A} and the second cooling medium channel CC_{B} and blocks the cooling medium circulation in the other cooling medium channel.

The cooling medium circulation in the specific cooling medium channel may represent that the flow of cooling medium is created in a direction from the inlet of the cooling medium channel toward the outlet, or from the outlet of the cooling medium channel toward the inlet. The blocked cooling medium circulation in the specific cooling medium channel may signify no flow of the cooling medium from any one of the inlet and outlet of the cooling medium channel to the other.

The operation of inducing the cooling medium circulation in the cooling medium channel may include, for example, supplying the cooling medium through the inlet of the cooling medium channel and forcing out the cooling medium through the outlet of the cooling medium channel in parallel with each other. More specifically, the function of inducing the cooling medium circulation in the cooling medium channel may include opening the inlet valve and the outlet valve of the cooling medium channel and operating the pump.

The operation of blocking the cooling medium circulation in the cooling medium channel may include, for example, stopping supplying the cooling medium through the inlet of the cooling medium channel and stopping forcing out the cooling medium through the outlet of the cooling medium channel. More specifically, the function of blocking the cooling medium circulation in the cooling medium channel may include closing at least one of the inlet valve or the outlet valve of the cooling medium channel and stopping the operation of the pump.

When the first control mode is performed, a target value of the cooling parameter (for example, the flow rate, flow velocity and/or temperature of the cooling medium) of any one cooling medium channel in which the cooling medium circulation is induced may be preset. The control unit 220 may control the cooling medium circulation unit 230 according to the target value related to the first control mode. Alternatively, the control unit 220 may set the target value of the cooling parameter of any one cooling medium channel in which the cooling medium circulation is induced, based on the fire risk index. As an example, the target value of the cooling medium circulation speed in the first cooling medium channel CC_{A} may be determined by applying a predetermined positive correspondence relationship to the fire risk index.

In the first control mode, each of the cooling medium channel in which the cooling medium circulation is induced and the cooling medium channel in which the cooling medium circulation is blocked may be preset. FIG. 7 shows that the cooling medium circulation in the first cooling medium channel CC_{A} positioned on the battery pack 10 is induced, and the cooling medium circulation in the second cooling medium channel CC_{B} positioned under the battery pack 10 is blocked.

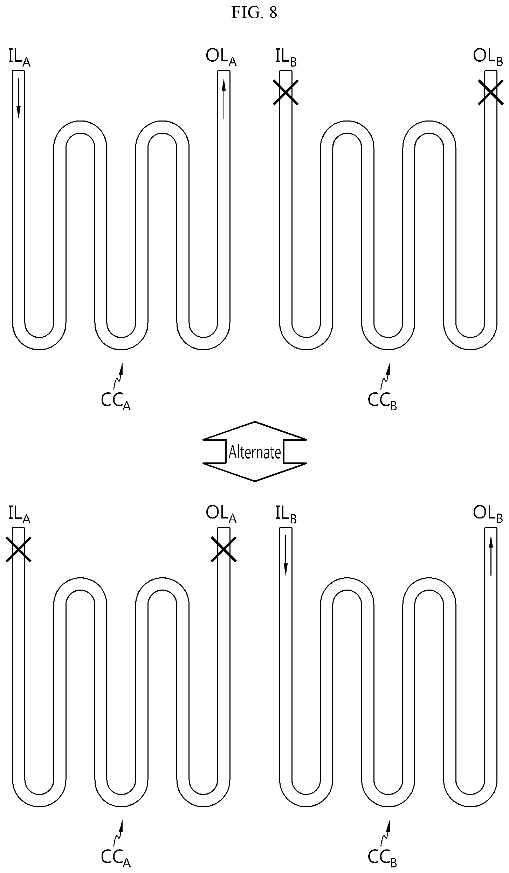

FIG. 8 is a diagram referenced in describing a second control mode.

Referring to FIG. 8, the control unit 220 may set the second control mode as the target control mode in response to the fire risk index being less than the first set value. The first control mode described above and the second control mode described below may be alternatives to each other.

The second control mode may be a control mode that induces the cooling medium circulation in the first cooling medium channel CC_{A} and the second cooling medium channel CC_{B} in an alternating manner. Specifically, the second control mode may include repeating a set of first and second operations in cycles, wherein the first operation includes inducing the cooling medium circulation in the first cooling medium channel CC_{A} and blocking the cooling medium circulation in the second cooling medium channel CC_{B} in parallel with each other for a first time, and the second operation includes blocking the cooling medium circulation in the first cooling medium channel CC_{A} and inducing the cooling medium circulation in the second cooling medium channel CC_{B} in parallel with each other for a second time.

When the second control mode is performed, each of the target value of the cooling parameter of any one cooling medium channel in which the cooling medium circulation is facilitated by the first operation and the target value of the cooling parameter of any one cooling medium channel in which the cooling medium circulation is facilitated by the second operation may be preset. Alternatively, the control unit 220 may set at least one target value related to the second control mode based on the fire risk index. For example, the target value of the cooling medium circulation speed in each of the first operation and the second operation may be determined by applying the predetermined positive correspondence relationship to the fire risk index.

The control unit 220 may control the cooling medium circulation unit 230 according to each target value related to the second control mode.

The first time and the second time may be equal or different. At least one of the first time or the second time may be preset.

When any one of the first control mode described above with reference to FIG. 7 and the second control mode described above with reference to FIG. 8 is set as the target control mode, simultaneous cooling medium circulation in the first cooling medium channel CC_{A} and the second cooling medium channel CC_{B} is not induced, thereby reducing power consumption of the battery pack 10.

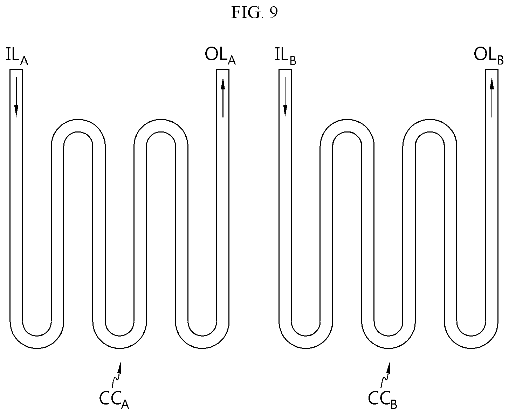

FIG. 9 is a diagram referenced in describing a third control mode.

Referring to FIG. 9, the control unit 220 may set the third control mode as the target control mode in response to the fire risk index being equal to or more than the first set value (and less than the second set value). For example, when the fire risk index rises and reaches the first set value while in the first control mode or the second control mode, the control unit 120 may switch the target control mode from the first control mode or the second control mode to the third control mode.

The fire risk index equal to or more than the first set value may indicate the overheated battery pack 10, i.e., signs of thermal runaway at or above a predetermined level.

The third control mode may be a control mode that induces the cooling medium circulation in the first cooling medium channel CC_{A} and the cooling medium circulation in the second cooling medium channel CC_{B} in parallel with each other.

When the third control mode is performed, each of the target value of the cooling parameter of the first cooling medium channel CC_{A} and the target value of the cooling parameter of the second cooling medium channel CC_{B} may be preset. The control unit 220 may control the cooling medium circulation unit 230 according to each target value related to the third control mode.

When the third control mode is set as the target control mode, simultaneous cooling medium circulation in the first cooling medium channel CC_{A} and the second cooling medium channel CC_{B} may achieve faster cooling of the battery pack 10 than the first control mode or the second control mode. In addition, electrical energy stored in the battery pack 10 is rapidly consumed by the battery cooling control apparatus 200, which has the advantage of preemptively reducing the severity in case the battery pack 10 actually ignites.

Fourth to seventh control modes as described below may be provided to increase the internal pressure of at least one of the first cooling medium channel CC_{A} or the second cooling medium channel CC_{B}.

FIG. 10 is a diagram referenced in describing the fourth control mode.

Referring to FIG. 10, the control unit 220 may set the fourth control mode as the target control mode in response to the fire risk index being equal to or more than the second set value. The fire risk index being equal to or more than the second set value may indicate that signs of thermal runaway of the battery pack 10 are too serious to stop the thermal propagation using the cooling network, or thermal propagation has occurred.

In this situation, it may be necessary to causeintentional damage to at least one of the first cooling medium channel CC_{A} or the second cooling medium channel CC_{B} to deliver the cooling medium to the outer surface of at least one of the plurality of battery blocks BB₁~BB_{N} as a sort of fire extinguishing material, and this action may be done by performing the fourth control mode.

The fourth control mode may be a control mode that increases the cooling medium circulation speed in at least one of the first cooling medium channel CC_{A} or the second cooling medium channel CC_{B}. The reduction in the cooling medium circulation speed may encompass the concept of blocking of cooling medium circulation. While in the fourth control mode, the cooling medium circulation speed in the other cooling medium channel of the first cooling medium channel CC_{A} and the second cooling medium channel CC_{B} may be reduced.

When the fourth control mode is performed, the target value of the cooling parameter of any one cooling medium channel in which the cooling medium circulation speed is increased may be preset. In the fourth control mode, the target value of the cooling parameter of the cooling medium channel in which the cooling medium circulation speed is increased may be equal to or larger than the target value related to the first control mode. In addition, the target value of the cooling parameter of the other cooling medium channel in which the cooling medium circulation speed is reduced may be preset. In the fourth control mode, the target value of the cooling parameter of the cooling medium channel in which the cooling medium circulation speed is reduced may be equal to or smaller than the target value related to the first control mode.

Alternatively, the control unit 220 may set the target value for the cooling medium circulation speed of at least one of the first cooling medium channel CC_{A} or the second cooling medium channel CC_{B} based on the fire risk index. As an example, the target value for the cooling medium circulation speed of the first cooling medium channel CC_{A} may be determined by applying the predetermined positive correspondence relationship to the fire risk index. As another example, the target value for the cooling medium circulation speed of the second cooling medium channel CC_{A} may be determined by applying a predetermined negative correspondence relationship to the fire risk index.

The control unit 220 may control the cooling medium circulation unit 230 according to each target value related to the fourth control mode.

FIG. 10 shows that the cooling medium circulation speed in the first cooling medium channel CC_{A} increases (see the bigger arrow) and the cooling medium circulation speed in the second cooling medium channel CC_{B} decreases (see the smaller arrow). When the fourth control mode is set as the target control mode, the control unit 220 may allow the cooling medium to flow into the first cooling medium channel CC_{A} through any one (for example, IL_{A}) of the inlet IL_{A} and the outlet OL_{A} of the first cooling medium channel CC_{A} and allow the cooling medium to flow out of the first cooling medium channel CC_{A} through the other one (for example, OL_{A}). Likewise, the control unit 220 may allow the cooling medium to flow into the second cooling medium channel CC_{B} through any one (for example, IL_{B}) of the inlet IL_{B} and the outlet OL_{B} of the second cooling medium channel CC_{B} and allow the cooling medium to flow out of the second cooling medium channel CC_{B} through the other one (for example, OL_{B}). Because the first cooling medium channel CC_{A} and the second cooling medium channel CC_{B} share the cooling medium tank 231, the cooling medium supply to the first cooling medium channel CC_{A} may be increased by the amount of reduction in the cooling medium supply to the second cooling medium channel CC_{B}.

At least one battery block showing severe signs of thermal runaway among the plurality of battery blocks BB₁~BB_{N} may act as a heat source causing thermal damage to at least one of the first cooling medium channel CC_{A} or the second cooling medium channel CC_{B}.

As each of the first cooling medium channel CC_{A} and the second cooling medium channel CC_{B} is adjacent to or physically close to the plurality of battery blocks BB₁~BB_{N} within a predetermined distance, parts of the first cooling medium channel CC_{A} may be degraded due to high temperature.

When at least one location of the first cooling medium channel CC_{A} is damaged by the strong internal pressure formed in the first cooling medium channel CC_{A} while in the fourth control mode, the cooling medium may flow down or be pumped from the inside of the first cooling medium channel CC_{A} toward the battery pack 10 through the damage site.

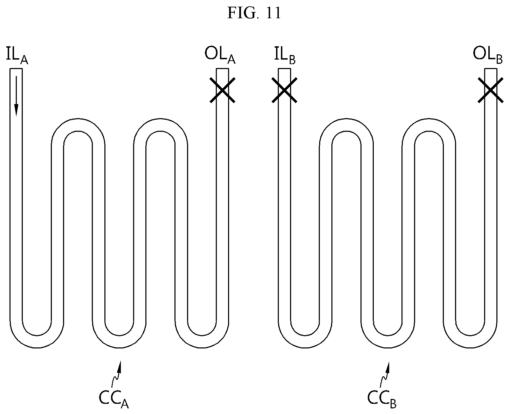

FIG. 11 is a diagram referenced in describing the fifth control mode.

Referring to FIG. 11, the control unit 220 may set the fifth control mode as the target control mode in response to the fire risk index being equal to or more than the second set value.

The fifth control mode may be a control mode that blocks the outflow of the cooling medium from any one cooling medium channel (for example, CC_{A}) of the first cooling medium channel CC_{A} and the second cooling medium channel CC_{B} to the cooling medium circulation unit 230 and blocks the cooling medium supply from the cooling medium circulation unit 230 to the other cooling medium channel (for example, CC_{B}). In this instance, the cooling medium supply to the cooling medium channel whose outflow of the cooling medium is blocked may continue.

FIG. 11 shows that the cooling medium supply through the inlet IL_{A} of the first cooling medium channel CC_{A} continues while the flow of the cooling medium through the outlet OL_{A} is obstructed, and the flow of the cooling medium (i.e., the cooling medium supply and/or the cooling medium release) through the inlet IL_{B} and the outlet OL_{B} of the second cooling medium channel CC_{B} is obstructed. In this instance, the target value of the flow rate of the cooling medium supplied to the first cooling medium channel CC_{A} through the inlet IL_{A} or the outlet OL_{A} may be preset.

Accordingly, in the same way as the fourth control mode, while in the fifth control mode, when the internal pressure of the first cooling medium channel CC_{A} gradually increases and at least one location of the first cooling medium channel CC_{A} is damaged, the cooling medium may flow down or be pumped into the battery pack 10 through the damage site.

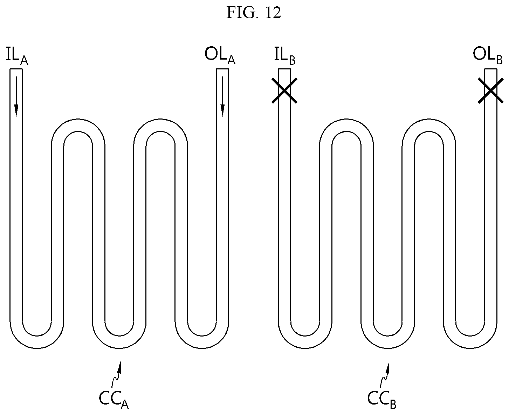

FIG. 12 is a diagram referenced in describing the sixth control mode.

Referring to FIG. 12, the control unit 220 may set the sixth control mode as the target control mode in response to the fire risk index being equal to or more than the second set value.

The sixth control mode may be a control mode that performs the cooling medium supply through the outlet of at least one of the first cooling medium channel CC_{A} or the second cooling medium channel CC_{B}. In this case, the cooling medium supply through the inlet of at least one of the first cooling medium channel CC_{A} or the second cooling medium channel CC_{B} may continue or stop.

FIG. 12 shows the first cooling medium channel CC_{A} in which the cooling medium supply through the inlet IL_{A} and the outlet OL_{A} is performed, and the second cooling medium channel CC_{B} in which the flow of the cooling medium through the inlet IL_{B} and the outlet OL_{B} is obstructed. In this instance, the target value of the cooling medium parameter (for example, the flow rate) of the cooling medium supplied to each of the inlet IL_{A} and the outlet OL_{A} of the first cooling medium channel CC_{A} may be preset.

Accordingly, while in the sixth control mode, the internal pressure of the first cooling medium channel CC_{A} may increase more rapidly than in the fourth and fifth control modes, triggering damage to at least one location of the first cooling medium channel CC_{A} more quickly, and pumping a larger amount of cooling medium toward the battery pack 10 more strongly through the damage site.

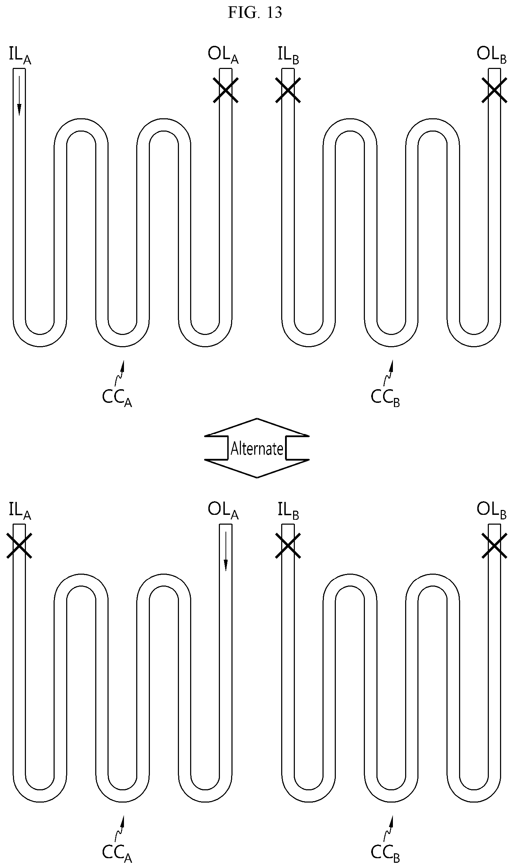

FIG. 13 is a diagram referenced in describing the seventh control mode.

Referring to FIG. 13, the control unit 220 may set the seventh control mode as the target control mode in response to the fire risk index being equal to or more than the second set value.

The seventh control mode may be a control mode that performs the cooling medium supply through the inlet and the outlet of at least one of the first cooling medium channel CC_{A} or the second cooling medium channel CC_{B} in an alternating manner. FIG. 13 shows that the cooling medium supply to the first cooling medium channel CC_{A} through the inlet IL_{A} of the first cooling medium channel CC_{A} and the cooling medium supply to the first cooling medium channel CC_{A} through the outlet OL_{A} are performed in an alternating manner, and the flow of the cooling medium through the inlet IL_{B} and the outlet OL_{B} of the second cooling medium channel CC_{B} is obstructed.

Specifically, while in the seventh control mode, the cooling medium supply to the first cooling medium channel CC_{A} through the inlet IL_{A} for the first time and the cooling medium supply to the first cooling medium channel CC_{A} through the outlet OL_{A} for the second time may be performed in an alternating manner.

During the cooling medium supply to the first cooling medium channel CC_{A} through the inlet IL_{A}, the outlet OL_{A} may be closed by the first outlet valve OV_{A} to block the outflow of the cooling medium from the first cooling medium channel CC_{A} through the outlet OL_{A}. During the cooling medium supply to the first cooling medium channel CC_{A} through the outlet OL_{A}, the inlet IL_{A} may be closed by the first inlet valve IV_{A} to block the outflow of the cooling medium from the first cooling medium channel CC_{A} through the inlet IL_{A}.

In at least one of the sixth control mode or the seventh control mode, at least one of the target value of the flow rate of the cooling medium supplied to the first cooling medium channel CC_{A} through the inlet IL_{A} or the target value of the flow rate of the cooling medium supplied to the first cooling medium channel CC_{A} through the outlet OL_{A} may be preset. Alternatively, the control unit 220 may set at least one of the target value of the flow rate of the cooling medium supplied to the first cooling medium channel CC_{A} through the inlet IL_{A} or the target value of the flow rate of the cooling medium supplied to the first cooling medium channel CC_{A} through the outlet OL_{A} based on the fire risk index. As an example, the target value of the flow rate of the cooling medium supplied to the first cooling medium channel CC_{A} through the inlet IL_{A} and the target value of the flow rate of the cooling medium supplied to the first cooling medium channel CC_{A} through the outlet OL_{A} may be determined by applying the predetermined positive correspondence relationship to the fire risk index.

The fourth to seventh control modes may be alternatives to each other.

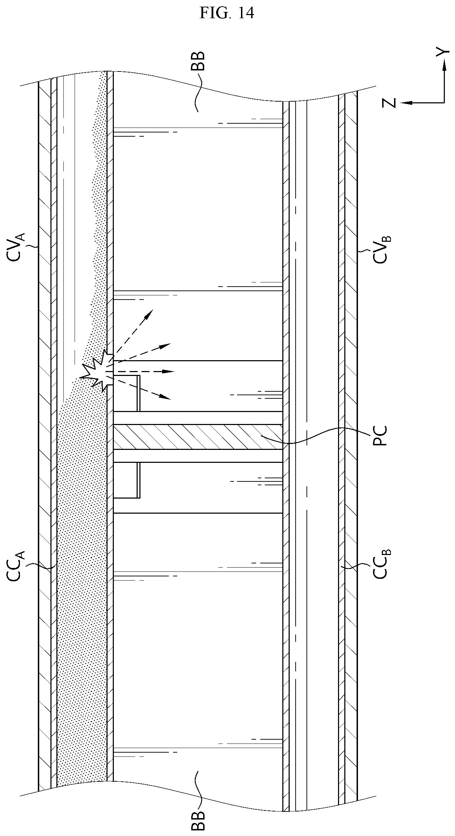

FIG. 14 is a diagram referenced in describing an exemplary situation of cooling medium leakage from the cooling network to the battery pack. To help understanding, a side view in a Y-Z plane is shown.

Referring to FIG. 14, the cooling medium leaking through the damage site of the first cooling medium channel CC_{A} may fall down to the battery pack 10, and accordingly, parts of the battery pack 10 may be directly covered with the cooling medium. In this situation, the cooling medium may directly cool the battery pack 10 and reduce the contact area between the battery pack 10 and air, thereby suppressing fire risks of the battery pack 10 or reducing the scale of fire in the battery pack 10.

For reference, the shaded area of the first cooling medium channel CC_{A} in FIG. 14 represents the flow rate (or circulation speed, pressure) of the cooling medium flowing through the first cooling medium channel CC_{A}. As illustrated, on the basis of the damage site, the flow rate (or circulation speed, pressure) of the cooling medium significantly decreases due to cooling medium leakage at the damage site. As a result, there may be a large difference between the cooling medium parameter at the inlet IL_{A} side measured by the first inlet sensor IS_{A} and the cooling medium parameter at the outlet OL_{A} side measured by the first outlet sensor OS_{A.}

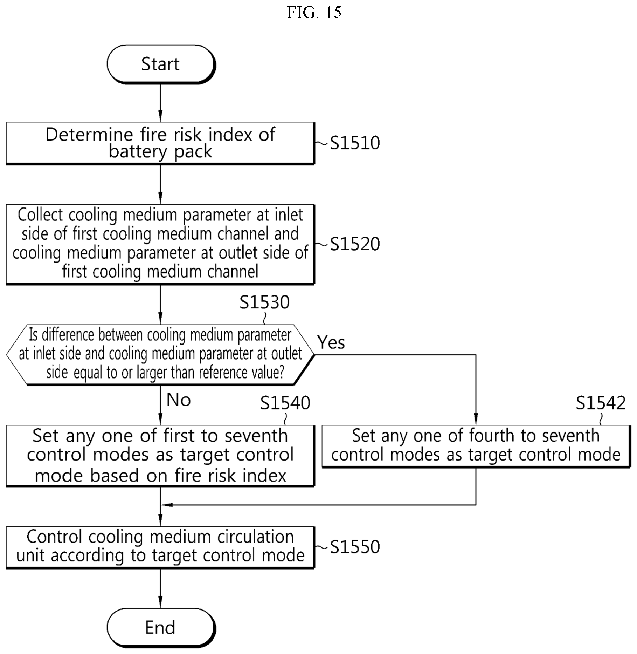

FIG. 15 is a flowchart referenced in briefly describing the cooling control method according to still another embodiment of the present disclosure. The method according to FIG. 15 is a variation of the method according to FIG. 6 and may be performed periodically or aperiodically in a repeated manner. The method according to FIG. 15 may be based on the cooling medium parameters related to at least one of the first cooling medium channel CC_{A} or the second cooling medium channel CC_{B}. To help understanding, although the method of FIG. 15 is described as being performed based on the cooling medium parameters related to the first cooling medium channel CC_{A}, those skilled in the art will readily understand that the method of FIG. 15 may be performed based on the cooling medium parameters related to the second cooling medium channel CC_{B}.

Referring to FIG. 15, in step S1510, the control unit 220 determines the fire risk index of the battery pack 10. The step S1510 may be substantially the same as the step S610.

In step S1520, the control unit 220 collects the cooling medium parameter at the inlet IL_{A} side of the first cooling medium channel CC_{A} and the cooling medium parameter at the outlet OL_{A} side of the first cooling medium channel CC_{A} from the first inlet sensor IS_{A} and the first outlet sensor OS_{A}.

In step S1530, the control unit 220 determines whether a difference between the two cooling medium parameters is equal to or larger than a reference value. For example, the control unit 220 determines whether the cooling medium parameter at the inlet IL_{A} side is larger than the cooling medium parameter at the outlet OL_{A} by the reference value or more. A value of the step S1530 being "Yes" may indicate a situation strongly suggesting the cooling medium leaking out of the first cooling medium channel CC_{A} as shown in FIG. 14. When the value of the step S1530 is "No", step S1540 may be performed. When the value of the step S1530 is "Yes", step S1542 may be performed.

In the step S1540, the control unit 220 sets any one of the first to seventh control modes as the target control mode based on the fire risk index of the battery pack 10 determined in the step S1510. The step S1540 may be substantially the same as the step S620. That is, the above description of the step S1540 signifies that the target control mode may be any one of the first to seventh control modes, and does not necessarily signify that all of the first to seventh control modes should be preset as candidates for the target control mode. As an example, because the first control mode and the second control mode may be alternatives to each other, any one of the first control mode and the second control mode may be excluded from the candidates for the target control mode. As another example, because the fourth to seventh control modes may be alternatives to each other, any one, two or three of the fourth to seventh control modes may be excluded from the candidates for the target control mode.

In the step S1542, the control unit 220 sets any one of the fourth to seventh control modes as the target control mode. That is, in the step S1542, the first to third control modes may be excluded from candidates for the target control mode. In addition, the above description of the step S1542 signifies that the target control mode may be any one of the fourth to seventh control modes, and does not signify that all of the fourth to seventh control modes should be preset as the candidates for the target control mode. That is, any one, two or three of the fourth to seventh control modes may be excluded from the target control mode. As an example, only the set of instructions related to the fourth control mode among the fourth to seventh control modes may be recorded in the memory device of the control unit 220, and in this case, obviously, the fourth control mode may be set as the target control mode.

In step S1550, the control unit 220 controls the cooling medium circulation unit 230 according to the target control mode set in the step S1540. The step S1550 may be substantially the same as the step S630.

Another embodiment of the present disclosure may provide a computer-readable medium having recorded thereon a program for causing a computer to perform the above-described embodiments.

The program may be implemented by hardware components, software components, and/or a combination thereof. The program may be executed by all systems capable of executing computer-readable instructions.

The software may include computer programs, code, instructions or a combination thereof, and may configure a processing device to operate as desired or command the processing device independently or collectively.

The software may be implemented as a computer program including instructions stored on computer-readable storage media. The computer-readable storage media include, for example, magnetic recording media (for example, read-only memory (ROM), random-access memory (RAM), floppy disk, hard disk) and optical reader media (for example, CD-ROM, Digital Versatile Disc (DVD). The computer-readable storage medium may be distributed across computer systems connected via a network to store and execute the computer-readable code in a distributed manner. The recording medium may be read by the computer, stored in the memory and executed by the processor.

The computer-readable medium may be provided in the form of a non-transitory storage medium. Here, the 'non-transitory storage medium' refers to a tangible device and does not include a signal (for example, electromagnetic waves), and this term encompasses semi-permanent data storage on the recording medium and temporary data storage. For example, the 'non-transitory storage medium' may include a buffer in which data is temporarily stored.

Additionally, the program may be provided in such a manner that it is included in a computer program product. The computer program product may be a product that is transacted between a seller and a buyer.

The computer program product may include a software program, and a computer-readable recording medium on which the software program is stored. For example, the computer program product may include a product in the form of a software program (for example, a downloadable application) distributed electronically through an electronic device manufacturer or an electronic market. For electronic distribution, at least a part of the software program may be stored on the recording medium or temporarily created. In this case, the recording medium may be a recording medium of the electronic device manufacturer's server, the electronic market's server or an intermediary server that temporarily stores the software program.

The embodiments of the present disclosure described hereinabove are not realized only through the apparatus and method, and may be implemented through the program that performs the function corresponding to the exemplary configuration of the present disclosure or the recording medium having the program recorded thereon, and such implementation may be easily achieved by those skilled in the art from the disclosure of the embodiments previously described.

Although the present disclosure has been hereinabove described with regard to certain embodiments and drawings, the present disclosure is not limited thereto and it is obvious to those skilled in the art to make various modifications and changes within the scope of the technical aspects of the present disclosure and the appended claims and their equivalents.

Additionally, as many substitutions, modifications and changes may be made to the present disclosure by those skilled in the art without departing from the technical aspects of the present disclosure, the present disclosure is not limited by the above-described embodiments and the accompanying drawings, and some or all of the embodiments may be selectively combined to allow various modifications.

## Claims

1. A battery cooling control apparatus comprising:
a cooling network including a first cooling medium channel and a second cooling medium channel for a battery pack;
a cooling medium circulation unit configured to individually induce or block cooling medium circulation in the first cooling medium channel and cooling medium circulation in the second cooling medium channel; and
a control unit configured to set a target control mode for the cooling medium circulation unit based on a fire risk index of the battery pack,
wherein the control unit is configured to:
control the cooling medium circulation unit according to the target control mode.

2. The battery cooling control apparatus according to claim 1,
wherein the control unit is configured to:
in response to the fire risk index of the battery pack being less than a first set value, set, as the target control mode, a control mode that induces the cooling medium circulation in any one of the first cooling medium channel and the second cooling medium channel and blocks the cooling medium circulation in the other one of the first cooling medium channel and the second cooling medium channel.

3. The battery cooling control apparatus according to claim 1,
wherein the control unit is configured to:
in response to the fire risk index of the battery pack being less than a first set value, set, as the target control mode, a control mode that induces the cooling medium circulation in the first cooling medium channel and the cooling medium circulation in the second cooling medium channel in an alternating manner.

4. The battery cooling control apparatus according to claim 1,
wherein the control unit is configured to:
in response to the fire risk index of the battery pack being equal to or more than a first set value, set, as the target control mode, a control mode that induces both of the cooling medium circulation in the first cooling medium channel and the cooling medium circulation in the second cooling medium channel.

5. The battery cooling control apparatus according to claim 1,
wherein the control unit is configured to:
in response to the fire risk index of the battery pack being equal to or more than a second set value that is larger than the first set value, set, as the target control mode, a control mode that induces the cooling medium circulation in any one of the first cooling medium channel and the second cooling medium channel and blocks the cooling medium circulation in the other one of the first cooling medium channel and the second cooling medium channel.

6. The battery cooling control apparatus according to claim 1,
wherein the control unit is configured to:
in response to the fire risk index of the battery pack being equal to or more than a second set value that is larger than the first set value, set, as the target control mode, a control mode that increases an internal pressure of any one cooling medium channel of the first cooling medium channel and the second cooling medium channel and reduces an internal pressure of the other one cooling medium channel of the first cooling medium channel and the second cooling medium channel.

7. The battery cooling control apparatus according to claim 6,
wherein the control unit is configured to:
control the cooling medium circulation unit to increase a cooling medium circulation speed in the any one cooling medium channel and reduce a cooling medium circulation speed in the other cooling medium channel according to the target control mode.

8. The battery cooling control apparatus according to claim 1,
wherein the control unit is configured to:
control the cooling medium circulation unit to perform cooling medium supply to the any one cooling medium channel through both of an inlet and an outlet of the any one cooling medium channel according to the target control mode.

9. The battery cooling control apparatus according to claim 6,
wherein the control unit is configured to:
control the cooling medium circulation unit to perform cooling medium supply to the any one cooling medium channel through an inlet of the any one cooling medium channel and cooling medium supply to the any one cooling medium channel through an outlet of the any one cooling medium channel in an alternating manner according to the target control mode.

10. The battery cooling control apparatus according to claim 1,
wherein the first cooling medium channel and the second cooling medium channel are positioned to face each other, on two sides of the battery pack.

11. A battery pack comprising the battery cooling control apparatus according to any one of claims 1 to 10.

12. An electric vehicle comprising the battery pack according to claim 11.

13. A battery cooling control method comprising:
setting, based on a fire risk index of a battery pack, a target control mode for a cooling medium circulation unit that individually induces or blocks cooling medium circulation in a first cooling medium channel included in a cooling network and cooling medium circulation in a second cooling medium channel included in a cooling network; and
controlling the cooling medium circulation unit according to the target control mode.

14. The battery cooling control method according to claim 13,
wherein setting the target control mode comprises:
in response to the fire risk index of the battery pack being less than a first set value, setting, as the target control mode, a control mode that induces the cooling medium circulation in any one of the first cooling medium channel and the second cooling medium channel and blocks the cooling medium circulation in the other one.

15. The battery cooling control method according to claim 13,
wherein setting the target control mode comprises:
in response to the fire risk index of the battery pack being equal to or more than a first set value, setting, as the target control mode, a control mode that induces both of the cooling medium circulation in the first cooling medium channel and the cooling medium circulation in the second cooling medium channel.

16. The battery cooling control method according to claim 15,
wherein setting the target control mode comprises:
in response to the fire risk index of the battery pack being equal to or more than a second set value that is larger than the first set value, setting, as the target control mode, a control mode that increases an internal pressure of any one of the first cooling medium channel and the second cooling medium channel and reduces an internal pressure of the other one of the first cooling medium channel and the second cooling medium channel.

17. A computer-readable medium having recorded thereon a program for causing a computer to perform the battery cooling control method according to any one of claims 13 to 16.
